# EUROPÄISCHE PATENTSCHRIFT

(11) **EP 1 081 599 B1**
(45) Veröffentlichungstag und Bekanntmachung des Hinweises auf die Patenterteilung: **05.11.2008**
(21) Anmeldenummer: 00202910.6
(22) Anmeldetag: 14.08.2000
(51) Int. Cl.: G06F 15/78

(54) **Multiprozessorsystem**
Multiprocessor system
Système multiprocesseur

(30) Priorität: 21.08.1999 DE 19939763
(43) Veröffentlichungstag der Anmeldung: 07.03.2001
(73) Patentinhaber: NXP B.V., 5656 AG Eindhoven (NL)
(72) Erfinder: Hertwig, Axel, 52064 Aachen (DE); Bauer, Harald, 52064 Aachen (DE); Fawer, Urs, 52064 Aachen (DE); Lippens, Paul, 52064 Aachen (DE)
(74) Vertreter: van der Veer, Johannis Leendert

(56) Entgegenhaltungen:
- YAMAUCHI T, HAMMOND L, OLUKOTUN K: "A Single Chip Multiprocessor Integrated with DRAM" 24TH INTERNATIONAL SYMPOSIUM ON COMPUTER ARCHITECTURE; WORKSHOP ON MIXING LOGIC AND DRAM, 1. Juni 1997 (1997-06-01), XP002327454 DENVER, COLORADO, USA
- "AMBA Specification (Rev 2.0)" ANNOUNCEMENT ARM, 13. Mai 1999 (1999-05-13), Seiten 1-26, XP002288981
- LEVY M: "MICROPROCESSOR AND DSP TECHNOLOGIES UNITE FOR EMBEDDED APPLICATIONS" EDN ELECTRICAL DESIGN NEWS, ROGERS PUB. CO., ENGLEWOOD, COLO, US, Nr. EUROPE, 2. März 1998 (1998-03-02), Seiten 73-74,76,78, XP000779113 ISSN: 0012-7515
- MEYER B: "EIN CHIP FUR ALLE FALLE MVP - EIN DSP MIT UNGEWOHNLICH HOHER KOMPLEXITAT" ELEKTRONIK, WEKA FACHZEITSCR.-VERLAG, MUNCHEN, DE, Bd. 43, Nr. 22, 31. Oktober 1994 (1994-10-31), Seiten 164-170, XP000474174 ISSN: 0013-5658

## Beschreibung

Die Erfindung betrifft ein Multiprozessorsystem, insbesondere für Endgeräte der mobilen Funktelefonie.

Bei Endgeräten der mobilen Funktelefonie kommen zur Zeit Multiprozessorsysteme zum Einsatz, bei denen auf einem Chip zwei Prozessoren vorgesehen sind. Bei einem Prozessor kann es sich um einen System-Microcontroller handeln, der für Protokoll- und Steuerungsaufgaben mittlerer Leistung vorgesehen ist, während der andere Prozessor ein digitaler Signalprozessor hoher Leistung sein kann. Jedem Prozessor ist wenigstens ein chipexterner Speicher vorgesehen, so z.B. ein externer Flash-Programm-Speicher oder entsprechende externe Datenspeicher. In diesem System ist also ein bestimmter Speicher nur einem Prozessor zugeordnet, das heisst, nur dieser Prozessor kann auf den festgelegten Speicher zugreifen. Eine derartige Systemkonfiguration ist jedoch in mehrerlei Hinsicht nachteilig. Zum einen sind für die Kommunikation der verschiedenen Chips, die die Prozessoren einerseits und die separaten Speicher andererseits aufweisen, eine Vielzahl von Pins am jeweiligen Chip zu belegen. Weiterhin ist der Stromverbrauch für die Programm- und Datenkommunikation beachtlich hoch. Auch benötigt die beschriebene Konfiguration beachtlich viel Platz, was insbesondere bei den immer kleiner werdenden Endgeräten nachteilig ist.

Der Artikel " A Single Chip Multiprozessorsystem integrated with DRAM" von Tadaaki Yamauchi, Lance Hammond and Kunle Olukotum, 24th International Symposium on Computer Architecture; Workshop on Mixing Logic and DRAM, 1.06.1997 beschreibt die Verwendung von mehreren Prozessoren, wobei die Prozessoren über einen Zwischenspeicher und einen Datenbus auf einen gemeinsamen Speicher zugreifen.

Die AMBA Spezifikation (Rev 2.0)13.05.1999 beschreibt die Verwendung einer Brücke zur Kopplung von Bussystemen mit unterschiedlichen Taktraten.

Der Artikel "Microprocessors and DSP Technolgies Unite for Embedded Applications", Levy, M., EDN Electrical Design News, Rogers Pub. Co. Engelwood, Colo, US, Nr-Europe 2.03 1998 beschreibt den Aufbau von Dual Core Systemen mit einem DSP und einem Mikroprozessor.

Der Erfindung liegt damit das Problem zugrunde, ein Multiprozessorsystem, welches im Bereich der Telekommunikationstechnik und dort insbesondere bei Endgeräten der mobilen Funktelefonie Anwendung finden kann, anzugeben, welches gegenüber dem beschriebenen Stand der Technik verbessert ist.

Diese Aufgabe wird durch die Merkmale der unabhängigen Ansprüche gelöst.

Beim erfindungsgemässen Prozessorsystem sind mit besonderem Vorteil einerseits die Prozessoren, andererseits wenigstens ein wiederbeschreibbarer Speicher, auf den im Rahmen des Betriebes beide Prozessoren zugreifen können und entsprechende Informationen abfragen oder dort einschreiben können, auf einem gemeinsamen Chip integriert. Der erste Prozessor, bei dem es sich beispielsweise um einen digitalen Signalprozessor handeln kann, ist über wenigstens einen Cache-Speicher mit dem wiederbeschreibbaren Speicher verbunden. Der Zugriff des zweiten Prozessors, bei dem es sich um einen System-Microcontroller handeln kann, wird über wenigstens eine Brücke realisiert. Die erfindungsgemässe Integration der genannten Elemente auf einem gemeinsamen Chip ermöglicht eine Kommunikation zwischen den Prozessoren und dem Speicher direkt auf dem Chip, irgendwelche Pins sind, da der Speicher eben nicht extern ist, nicht vorzusehen. Die Integrationsrate des Chips wird beachtlich erhöht. Auch der im Rahmen der Kommunikation zwischen den Prozessoren und dem Speicher benötigte Strom ist wesentlich geringer, da ein chipintegrierter Speicher generell den Stromverbrauch eines Systems optimiert. Die beschriebene Systemarchitektur kann speziell bei Endgeräten der mobilen Funktelefonie in den Standards GSM, DCS1800, PCS1900, IS95 und IS136 Anwendung finden.

Beide Prozessoren können mit unterschiedlichen, voneinander getrennten Arbeitstakten arbeiten. Weiterhin kann vorgesehen sein, dass der Speicher über zwei Cache-Speicher an dem ersten Prozessor angeschlossen ist, von denen einer für einen Zugriff auf den Speicher zum Auslesen oder Einschreiben eines Programms und der andere für einen Zugriff auf den Speicher zum Auslesen von Daten dient. Der nicht flüchtige wiederbeschreibbare Speicher weist also verschiedene Speicherbereiche auf, in denen unterschiedliche Informationen abgelegt werden. Programm und Daten für jeden der angeschlossenen Prozessoren können frei im nicht flüchtigen wiederbeschreibbaren Speicher abgelegt werden. Über die beiden Cache-Speicher, bei denen es sich um schnelle Pufferspeicher handelt, wird sichergestellt, dass die aus dem relativ langsam arbeitenden Speicher abzurufenden Daten bzw. Informationen dem schnell arbeitenden ersten Prozessor bzw. dem digitalen Signalprozessor zur Verfügung stehen. Die beiden Cache-Speicher ermöglichen ferner auch einen einfachen Zugriff des zweiten Prozessors (z.B. Microcontroller) auf den Speicher, da mittels der Cache-Speicher sichergestellt wird, dass der erste Prozessor (z.B. digitaler Signalprozessor) nicht ständig Daten aus dem Speicher abruft und diesen belegt, da die wesentlichen Daten, die der erste Prozessor bzw. der digitale Signalprozessor benötigt, in der Regel in den beiden Cache-Speichern bereits abgelegt sind und von dort abgerufen werden, so dass der Speicher nicht dauernd vom ersten Prozessor belegt ist und auch der zweite Prozessor über die Brücke auf den Speicher zugreifen kann.

Wie beschrieben ist der Speicher vorteilhaft in separate Speicherbereiche für ein Programm und für Daten unterteilt. Dabei können den jeweiligen Prozessoren separate Speicherbereiche für Programm und für Daten zugeordnet sein, das heißt, es sind beispielsweise zwei Programmbereiche vorhanden, von denen einer dem ersten Prozessor bzw. dem digitalen Signalprozessor und der andere dem zweiten Prozessor bzw. dem System-Microcontroller zugeordnet ist, wie auch entsprechende Datenspeicherbereiche vorgesehen sind. Insgesamt ist die Möglichkeit zur beliebigen Partionierung der Speicherbereiche gegeben. Es ist lediglich erforderlich, vor einer ersten Implementierung den Gesamtspeicherbedarf zu bestimmen, die Partionierung kann dann beliebig eingestellt werden. Selbstverständlich ist es auch noch möglich, einen weiteren Speicherbereich für Daten, auf die beide zugreifen können, vorzusehen.

In Weiterbildung der Erfindung kann vorgesehen sein, dass die Brücke zur Synchronisation zwischen einem ersten Datenbus, über den der Speicher kommuniziert, und einem zweiten Datenbus, über den der zweite Prozessor kommuniziert, und der hinsichtlich der Übertragungsbreite schmäler ist, ausgebildet ist. Die vollständige Integration der genannten Systemkomponenten auf einem Chip ermöglicht auf einfache Weise die Ausbildung von Datenbussen. Da der integrierte Speicher insbesondere im Rahmen der Kommunikation mit dem ersten Prozessor bzw. dem digitalen Signalprozessor hohe Übertragungsraten bewerkstelligen muss ist es zweckmäßig, diesem einen Datenbus mit hoher Übertragungsbreite zuzuordnen, über den die Daten an den mit einer hohen Taktfrequenz arbeitenden ersten Prozessor geliefert werden. Da der zweite Prozessor mit einem niedrigeren Takt und infolgedessen langsamer arbeitet ist es ausreichend, diesem einen hinsichtlich der Übertragungsrate langsameren Datenbus zuzuordnen. Da nun aber der zweite Prozessor auch auf den wiederbeschreibbaren Speicher zugreifen kann ist es erforderlich, die über den ersten Datenbus auf den zweiten Datenbus gelieferten Informationen entsprechend zu synchronisieren, was mittels der Brücke auf einfache Weise bewerkstelligt wird. Als zweckmäßig hat es sich erwiesen, wenn der dem Speicher zugeordnete Datenbus eine Übertragungsbreite von 128 bit und der dem zweiten Prozessor zugeordnete Datenbus eine Übertragungsbreite von 32 bit aufweist.

Wie beschrieben wird durch die Verwendung des oder der Cache-Speicher erreicht, dass der erste Prozessor bzw. der digitale Signalprozessor nicht ständig den wiederbeschreibbaren Speicher bzw. dem diesen zugeordneten Datenbus belegt, vielmehr erfolgt lediglich ein diskontinuierlicher Zugriff auf den Speicher, nämlich dann, wenn neue Informationen in den oder die Cache-Speicher einzuladen ist. Sollte es dennoch zu einem Zugriffskonflikt kommen, nämlich dann, wenn zur gleichen Zeit auch der erste Prozessor auf den Speicher zugreifen möchte, wird dieser erfindungsgemäß mittels der Brücke, die zur Zugriffsverwaltung auf den Speicher ausgebildet ist, derart gelöst, dass bei einem Zugriffskonflikt bevorzugt der erste Prozessor bedient wird, da dieser die größere Last erzeugt und die höheren Echtzeitanforderungen zu erfüllen hat. Die Brücke ist also sowohl zur Synchronisation wie auch zur Arbitrierung ausgebildet.

Zur Speicherung vornehmlich flüchtiger, variabler Daten hat es sich als zweckmäßig erwiesen, wenn am zweiten Prozessor ein weiterer chipintegrierter Datenspeicher über einen Datenbus angeschlossen ist. In diesem Datenspeicher werden also kurzfristige Daten, beispielsweise errechnete Daten abgelegt, die in Kürze wieder überschrieben werden. Zur Ermöglichung eines Zugriffs auch des ersten Prozessors bzw. des digitalen Signalprozessors auf den weiteren Datenspeicher kann erfindungsgemäß ein DMA-Controller sowie eine zweite Brücke chipintegriert vorgesehen sein. Durch die Kombination des DMA-Controllers mit der zweiten Brücke wird auf einfache Weise der Zugriff auf den relativ langsam arbeitenden weiteren Datenspeicher ermöglicht. Insgesamt ist mit dieser Ausgestaltung nun ein auf einem gemeinsamen Chip integriertes System mit verschiedenen Prozessoren und verschiedenen Speichern vorgesehen, bei dem jeder Prozessor auf jeden Speicher zugreifen kann, so dass ein äußerst funktioneller Informationstransfer und Betrieb ermöglicht wird.

Weiterhin hat es sich als vorteilhaft erwiesen, wenn dem ersten Prozessor wenigstens ein interner schneller Datenspeicher und/oder wenigstens ein interner schneller Programmspeicher zugeordnet ist. In diesen sehr schnellen Speichern werden bevorzugt zeitkritische Programmteile, die dem ersten Prozessor bzw. dem digitalen Signalprozessor sehr kurzfristig zur Verfügung stehen müssen, oder aber modifizierbare, variable Daten, die ebenfalls kurzfristig zur Verfügung stehen müssen, abgelegt. Der erste Prozessor kann in diesem Zusammenhang eine doppelte Harvard-Architektur aufweisen, bei welcher jedem vorgesehenen Daten- oder Programmspeicher ein eigener Bus für Datenworte oder Programmworte zugeordnet ist.

Der wiederbeschreibbare Speicher kann erfindungsgemäß ein MTP-Speicher (multiple progammable-Speicher) oder ein FLASH-Speicher sein. Der weitere Datenspeicher am zweiten Prozessor kann ein DRAM (direct random access memory) oder ein SRAM (static random access memory) sein. Der interne schnelle Datenspeicher und/oder der interne schnelle Programmspeicher kann ein RAM sein. Weiterhin kann auch eine direkte Kommunikationsverbindung zwischen den beiden Prozessoren vorgesehen sein.

Durch das erfindungsgemäße Multiprozessorsystem ergeben sich eine Vielzahl von Vorteilen gegenüber dem Stand der Technik. Zum einen kann wie beschrieben die Partionierung zwischen den Prozessoren und zwischen Programmbereich und Datenbereich innerhalb des integrierten wiederbeschreibbaren Speichers beliebig verändert werden, es muss lediglich der Gesamtspeicherbedarf des Systems bei Fertigung des Chips feststehen. Durch die Möglichkeit der Mehrfachbeschreibung des wiederbeschreibbaren Speichers, in dem wie ausgeführt das Programm zum Betrieb des jeweiligen Gerätes abgelegt ist, können sowohl für den Systemcontroller als auch für den Signalprozessor einfach und schnell neue Software-Versionen geladen werden. Die Integration des bzw. der verschiedenen vorgesehenen Speicher auf dem Chip optimiert den Stromverbrauch des Systems und reduziert die Anzahl der Pins am Gehäuse des Chips bzw. lässt eine anderweitige Belegung vorhandener Pins zu. Dies führt insgesamt zu Kosten- und Platzersparnissen. Durch die vorgenommenen Zugriffsmechanismem auf die Speicher, die Dimensionierung der Cache-Speicher und der lokalen Speicher ist die etwas langsamere Zugriffszeit auf den mehrfachbeschreibbaren Speicher auf einfache Weise bei geringstmöglichen Kosten kompensiert. Schließlich verringert die Vereinigung mehrerer Speicher bzw. die unterschiedliche Partionierung und Aufteilung der Speicherbereiche in dem chipintegrierten wiederbeschreibbaren Speicher den Implementierungsoverhead und die benötigte Chipfläche.

Neben dem Multiprozessorsystem selbst betrifft die Erfindung ferner eine Verwendung des Multiprozessorsystems der vorbeschriebenen Art zum Betrieb eines Telekommunikationsendgeräts der mobilen Funktelefonie.

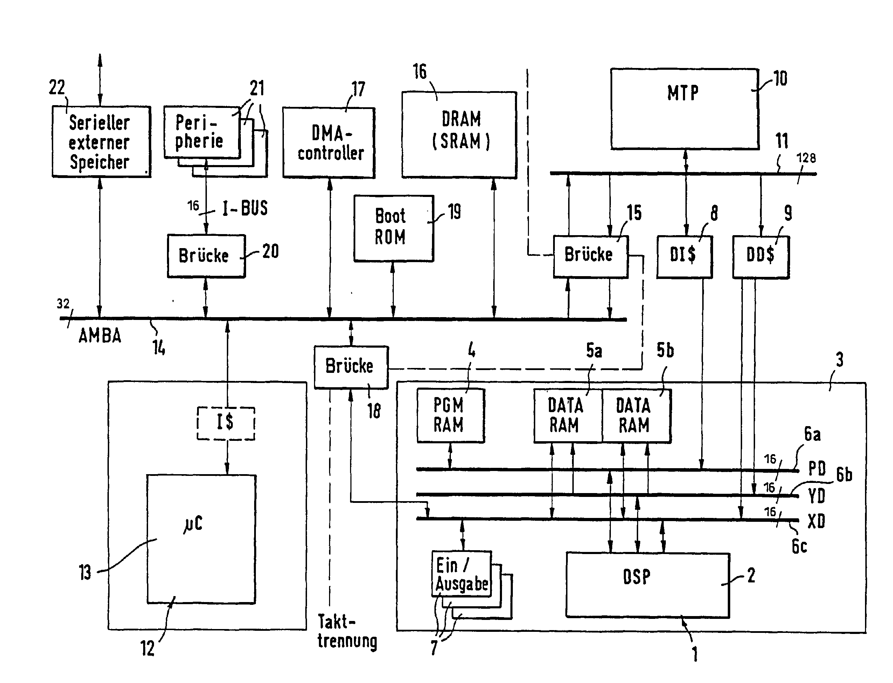

Weitere Vorteile, Merkmale und Einzelheiten der Erfindung ergeben sich aus dem im folgenden beschriebenen Ausführungsbeispiel sowie anhand der Zeichnung.

Die Figur zeigt in Form einer Prinzipskizze die auf einem nicht näher dargestellten Chip ausgebildeten bzw. integrierten Elemente. Gezeigt ist ein erster Prozessor 1 in Form eines digitalen Signalprozessors 2 (DSP). Der digitale Signalprozessor 2 ist ein leistungsstarker Prozessor mit einer Leistungsfähigkeit von 25 - 100 MIPS (millions of instructions pro second). Im Prozessor-Subsystem 3, dargestellt durch den in der Figur gezeigten Kasten, ist ferner ein interner schneller Programmspeicher 4 in Form eines integrierten RAM vorgesehen, in dem vom Signalprozessor 2 kurzfristig benötigte, zeitkritische Programmteile abgelegt sind. Ferner sind zwei integrierte schnelle Datenspeicher 5 zur Speicherung flüchtiger, kurzfristiger Daten vorgesehen. Den Speichern 4, 5 sind separate Busse 6a, 6b, 6c mit einer Übertragungsbreite von jeweils 16 bit zugeordnet. Über diese Busse kommuniziert der Signalprozessor 2 mit den jeweiligen Speichern. Der Programmspeicher 4 kann beispielsweise eine Speicherkapazität von 2 x 16 k bei einer Übertragungsbreite von 16 bit aufweisen, der Datenspeicher 5 kann mit einer Speicherkapazität von 8 x 16 k bei einer Übertragungsbreite von 16 bit dimensioniert sein. Ferner sind in dem Prozessor-Subsystem 3 mehrere Ein- und Ausgabeeinheiten 7 vorgesehen, über die einerseits Daten aus den Datenspeichern 5 ausgegeben bzw. an diese gegeben werden können, wie auch Daten aus einem später noch zu beschreibenden weiteren Datenspeicher.

Dem digitalen Signalprozessor 2 bzw. dem Prozessor-Subsystem 3 sind zwei Cache-Speicher 8, 9 zugeordnet, über welche der digitale Signalprozessor 2 auf einen ebenfalls am Chip integrierten wiederbeschreibbaren Speicher 10, der im gezeigten Beispiel als MTP-Speicher ausgebildet ist, zugreifen kann. Die Kommunikation zwischen den Cache-Speichern 8, 9 und dem wiederbeschreibbaren Speicher 10 erfolgt über einen Datenbus 11 mit einer bevorzugten Übertragungsbreite von 128 bit. Der Speicher 10 ist in unterschiedliche Speicherbereiche aufgeteilt, wobei in die Speicherbereiche einerseits ein Programm, andererseits konstante Daten eingeschrieben und ausgelesen werden können. Jeder Bereich ist nochmals unterteilt und entweder dem digitalen Signalprozessor 2 oder einem zweiten Prozessor 12 in Form eines System-Microcontrollers 13 (µC), welcher, wie nachfolgend noch beschrieben wird, ebenfalls Zugriff auf den Speicher 10 hat, zugeordnet. Der Zugriff auf die Programmwerte erfolgt über den Cache-Speicher 8, der Zugriff auf die Datenworte über den Cache-Speicher 9. Mittels der Cache-Speicher, die als schnelle Pufferspeicher arbeiten, wird sichergestellt, dass der digitale Signalprozessor 2 den Datenbus 11 nicht kontinuierlich belegt, vielmehr werden die benötigten Daten aus den Cache-Speichern 8, 9 ausgelesen, in welchen die benötigten Informationen gepuffert werden. Die Cache-Speicher 8, 9 kommunizieren mit dem digitalen Signalprozessor über die jeweiligen Busse 6a, 6b, und 6c. Bedingt durch diese Kommunikationsverbindung ist es auch möglich, Datenworte aus dem Speicher 10 bzw. den Cache-Speichern 8, 9 über die Ausgabeeinheiten 7 auszugeben. Der Speicher 10 sollte eine Speicherkapazität von wenigstens 0,5 - 2 Mbyte bei einer Übertragungsbreite von 128 bit aufweisen, selbstverständlich ist es auch möglich, diesen größer zu dimensionieren. Die Cache-Speicher können im Fall des Cache-Speichers 8 eine Größe von 512 byte aufweisen, die Größe des Cache-Speichers 9 kann 64 byte betragen.

Wie bereits beschrieben ist auf dem Chip ferner ein zweiter Prozessor in Form eines System-Microcontrollers 13 vorgesehen. Diesem zugeordnet ist ein zweiter Datenbus 14 mit einer Übertragungsbreite von 32 bit. Um dem System-Microcontroller 13 einen Zugriff auf die für ihn relevanten Programm- und Datenteile in dem Speicher 10 zu ermöglichen ist eine Brücke 15 vorgesehen, über welche der System-Microcontroller 13 via dem Datenbus 14 zugreifen kann. Die Brücke dient einerseits zur Synchronisation zwischen den beiden Datenbussen 11, 14, da beide - wie auch der digitale Signalprozessor 2 und der System-Microcontroller 13 - mit unterschiedlichen Takten arbeiten, wie durch die gestrichelte Linie "Takttrennung" angedeutet. Der digitale Signalprozessor sowie sämtliche ihm zugeordneten Komponenten arbeiten mit einem Arbeitstakt von beispielsweise 26 - 104 MHz, während der System-Microoontroller und die entsprechenden ihm zugeordneten Elemente mit einem Arbeitstakt von beispielsweise 26 MHz arbeiten. Daneben übernimmt die Brücke 15 auch Arbitrierungsaufgaben dergestalt, dass sie stets einen bevorzugten Zugriff des digitalen Signalprozessors 2 bzw. der Cache-Speicher 8, 9 auf den Speicher 10 zulässt. Ferner besteht die Möglichkeit, die Brücke 15 als kleinen Cache-Speicher zu verwenden, so dass weniger Speicherzugriffe seitens des System-Microcontrollers auf den Speicher 10 erforderlich sind. Auf diese Weise werden auch etwaige Wartezyklen hinsichtlich eines Speicherzugriffs durch den System-Microcontroller verringert.

Dem System-Microcontroller 13 ist ferner ein weiterer chipintegrierter Datenspeicher 16 in Form eines DRAM oder eines SRAM zugeordnet. Dieser kann eine Größe von 32 k bei einer Übertragungsbreite von 32 bit an den Datenbus 14 aufweisen. Auf den weiteren Datenspeicher 16 hat der System-Microcontroller 13 unmittelbaren Zugriff. Um auch einen Zugriff des digitalen Signalprozessors 2 auf den weiteren Datenspeicher, in dem flüchtige, kurzzeitige Daten abgelegt sind, zu ermöglichen, ist ein DMA-Controller 17, welcher ebenfalls am Datenbus 14 angeschlossen ist, sowie eine weitere Brücke 18, die mit dem Subsystem-internen Bus 6c verbunden ist, vorgesehen. Zwar arbeitet der weitere Datenspeicher 16 im Hinblick auf die hohe Taktfrequenz des digitalen Signalprozessors 2 sehr langsam, weshalb nur selten ein Zugriff erfolgen wird. Dieser ist jedoch mittels des DMA-Controllers 17 und der Brücke 18, die wiederum zur Synchronisation zwischen den unterschiedlichen Datenbussen sowie den Taktfrequenzen ausgebildet ist, möglich.

Weiterhin hängt am Datenbus 14 ein Boot-ROM 19, über welches die Erstkonfiguration des Speichers 10 und das erstmalige Einladen des Programms und etwaiger Daten erfolgt.

Weiterhin sind über eine dritte Brücke 20 verschiedene chipintegrierte Peripherieelemente 21 wie beispielsweise Schnittstellen zu externen Bauteilen oder dergleichen angeschlossen. Daneben kann über eine entsprechende Anschlusseinrichtung 22 ein chipexterner weiterer Speicher, beispielsweise ein FLASH-Speicher angeschlossen werden. Dieser dient zur Erweiterung des chipintegrierten Speichers 10, wenn dessen Speicherplatz nicht mehr ausreichen sollte. Der externe Speicher ist als Ein-/Ausgabeeinheit des System-Microcontrollers 13 angeschlossen. Der digitale Signalprozessor 2 kann auf diesen externen Speicher über den DMA-Controller 17 sowie die Brücke 18 zugreifen.

Es versteht sich von selbst, dass die genannten Speicher-Dimensionierungen sowie die Auslegung der Übertragungsraten und der Übertragungsbreiten der verwendeten Datenbusse abhängig vom jeweiligen Anwendungsfall geändert werden können.

## Patentansprüche

1. Multiprozessorsystem für Endgeräte der mobilen Funktelefonie, bei dem auf einem gemeinsamen Chip angeordnet sind:
- wenigstens zwei Prozessoren (2, 12),
- wenigstens ein wiederbeschreibbarer Speicher (10), auf den beide Prozessoren (2, 12) zugreifen können,
- wenigstens ein dem ersten Prozessor (2) zugeordneter Cache-Speicher (8, 9),
**dadurch gekennzeichnet, dass**
- beide Prozessoren (2, 12) mit unterschiedlichen, voneinander getrennten Arbeitstakten arbeiten, wobei eine Brücke (15) zur Synchronisation zwischen einem ersten Datenbus (11) und einem zweiten Datenbus (14) dient, wobei der zweite Datenbus (14) eine niedrigere Übertragungsbreite als der erste Datenbus (11) aufweist und wobei der erste Prozessor (2) über den besagten Cache-Speicher (8, 9) und den ersten Datenbus (11) und der zweite Prozessor (12) über den zweiten Datenbus (14), die Brücke (15) und den ersten Datenbus (11) auf den speicher (10) zugreifen, und wobei die Brücke (15) bei einem Zugriffskonflikt auf dem ersten Datenbus (11) zur Zugriffsverwaltung auf den Speicher (10) dient und den ersten Prozessor (2) vorrangig behandelt.

2. Multiprozessorsystem nach Anspruch 1, **dadurch gekennzeichnet, dass** der Speicher (10) über zwei Cache-Speicher (8, 9) an den ersten Prozessor (2) angeschlossen ist, von denen einer für einen Zugriff auf den Speicher (10) zum Auslesen eines Programms und der andere für einen Zugriff auf den Speicher (10) zum Auslesen von Daten dient.

3. Multiprozessorsystem nach Anspruch 1 oder 2, **dadurch gekennzeichnet, dass** der erste Prozessor (2) ein digitaler Signalprozessor (2) und der zweite Prozessor (12) ein System Microcontroller (13) ist.

4. Multiprozessorsystem nach einem der vorangehenden Ansprüche, **dadurch gekennzeichnet, dass** im Speicher (10) jedem Prozessor (2, 12) ein separater Speicherbereich für ein Programm und für Daten zugeordnet ist.

5. Multiprozessorsystem nach einem der vorangehenden Ansprüche, **dadurch gekennzeichnet, dass** der dem Speicher (10) zugeordnete Datenbus (11) eine Übertragungsbreite von wenigstens 128 bit und der dem zweiten Prozessor (12) zugeordnete Datenbus (14) eine Übertragungsbreite von wenigstens 32 bit aufweist.

6. Multiprozessorsystem nach einem der vorangehenden Ansprüche, **dadurch gekennzeichnet, dass** am zweiten Prozessor (12) über den zweiten Datenbus (14) ein weiterer chipintegrierter Datenspeicher (16) angeschlossen ist.

7. Multiprozessorsystem nach Anspruch 6, **dadurch gekennzeichnet, dass** zur Ermöglichung eines Zugriffs des ersten Prozessors (2) auf den weiteren Datenspeicher (16) am Chip ein DMA-controller (17) sowie eine zweite Brücke (18) vorgesehen ist.

8. Multiprozessorsystem nach einem der vorangehenden Ansprüche, **dadurch gekennzeichnet, dass** dem ersten Prozessor (2) wenigstens ein interner schneller Datenspeicher (5a, 5b) und/oder wenigstens ein interner schneller Programmspeicher (4) zugeordnet ist.

9. Multiprozessorsystem nach Anspruch 8, **dadurch gekennzeichnet, dass** das von dem ersten Prozessor (2) und dem oder den internen Speichern gebildete Prozessor-Subsystem (3) eine doppelte Harvard-Architektur aufweist.

10. Multiprozessorsystem nach einem der vorangehenden Ansprüche, **dadurch gekennzeichnet, dass** der Speicher (10) ein MTP-Speicher oder ein FLASH-Speicher ist.

11. Multiprozessorsystem nach Anspruch 6, **dadurch gekennzeichnet, dass** der weitere Datenspeicher (16) ein DRAM oder ein SRAM ist.

12. Multiprozessorsystem nach Anspruch 8,
**dadurch gekennzeichnet, dass** der interne schnelle Datenspeicher (5a, 5b) und/oder der Programmspeicher (4) ein RAM ist.

13. Mobilfunkterminal mit einem Multiprozessorsystem nach einem der Ansprüche 1 bis 12.

## Claims

1. A multiprocessor system for terminal devices of mobile radiotelephony in which are arranged on a common chip:
- at least two processors (2, 12),
- at least one rewritable memory (10) to which the two processors (2, 12) can have access,
- at least one cache memory (8, 9) assigned to the first processor (2),
**characterized in that**
- the two processors (2, 12) operate at different, mutually separate working cycles, in which a bridge (15) is used for synchronization between a first data bus (11) and a second data bus (14), in which the second data bus (14) has a smaller transmission width than the first data bus (11) and in which the first processor (2) via the said cache memory (8, 9) and the first data bus (11) and the second processor (12) via the second data bus (14), the bridge (15) and the first data bus (11) have acces to the memory (10), and in which the bridge (15) in case of a conflict of access on the first data bus (11) is used for access management of the memory (10) and gives priority to the first processor (2).

2. A multiprocessor system as claimed in claim 1, **characterized in that** the memory (10) is connected to the first processor (2) via two cache memories (8, 9), one of which is used for access to the memory (10) for reading a program and the other one of which is used for access to the memory (10) for reading out data.

3. A multiprocessor system as claimed in claim 1 or 2, **characterized in that** the first processor (2) is a digital signal processor (2) and the second processor (12) is a system microcontroller (13).

4. A multiprocessor system as claimed in any one of the preceding claims, **characterized in that** in the memory (10) each processor (2, 12) is assigned a separate memory area for a program and for data.

5. A multiprocessor system as claimed in any one of the preceding claims, **characterized in that** the data bus (11) assigned to the memory (10) has a transfer rate of at least 128 bits and the data bus (14) assigned to the second processor (12) has a transfer rate of at least 32 bits.

6. A multiprocessor system as claimed in any one of the preceding claims, **characterized in that** a further data memory (16) integrated on a chip is connected to the second processor (12) over the second data bus (14).

7. A multiprocessor system as claimed in claim 6, **characterized in that** for enabling an access of the first processor (2) to the further data memory (16) a DMA controller (17) as well as a second bridge (18) are provided on the chip.

8. A multiprocessor system as claimed in any one of the preceding claims, **characterized in that** the first processor (2) is assigned at least an internal high-speed data memory (5a, 5b) and/or at least an internal high-speed program memory (4).

9. A multiprocessor system as claimed in claim 8, **characterized in that** the processor sub-system (3) formed by the first processor (2) and the internal memory (memories) has a dual Harvard architecture.

10. A multiprocessor system as claimed in any one of the preceding claims, **characterized in that** the memory (10) is an MTP memory or a FLASH memory.

11. A multiprocessor system as claimed in claim 6, **characterized in that** the further data memory (16) is a DRAM or SRAM.

12. A multiprocessor system as claimed in claim 8, **characterized in that** the internal high-speed data memory (5a, 5b) and/or the program memory (4) is a RAM.

13. A mobile radio terminal with a multiprocessor system as claimed in any one of the claims 1 to 12.

## Revendications

1. Système multiprocesseurs pour terminaux de téléphonie mobile, dans le cadre duquel sont disposés sur une puce commune :
- au moins deux processeurs (2, 12),
- au moins une mémoire réinscriptible (10), à laquelle les deux processeurs (2, 12) peuvent accéder,
- au moins une mémoire cache (8, 9) affectée au premier processeur (2),
**caractérisé en ce que**
- les deux processeurs (2, 12) fonctionnent avec des cycles de travail différents, distincts les uns des autres, une passerelle (15) servant à la synchronisation entre un premier bus de données (11) et un second bus de données (14), le second bus de données (14) présentant une largeur de transmission inférieure au premier bus de données (11) et le premier processeur (2), par le biais de ladite mémoire cache (8, 9) et du premier bus de données (11), et le second processeur (12), par le biais du second bus de données (14), de la passerelle (15) et du premier bus de données (11), accédant à la mémoire (10), et la passerelle (15), en cas de conflit d'accès au premier bus de données (11) servant à la gestion des accès sur la mémoire (10) et traitant en priorité le premier processeur (2).

2. Système multiprocesseurs selon la revendication 1, **caractérisé en ce que** la mémoire (10) est connectée au premier processeur (2) par le biais de deux mémoires caches (8, 9), dont l'une sert pour l'accès à la mémoire (10) pour la lecture d'un programme et l'autre sert pour l'accès à la mémoire (10) pour la lecture de données.

3. Système multiprocesseurs selon la revendication 1 ou 2, **caractérisé en ce que** le premier processeur (2) est un processeur de signal numérique (2) et le second processeur (12) est un microcontrôleur (13).

4. Système multiprocesseurs selon l'une quelconque des revendications précédentes, **caractérisé en ce que** une zone de mémoire séparée pour un programme ou pour des données est affectée à chaque processeur (2, 12) dans la mémoire (10).

5. Système multiprocesseurs selon l'une quelconque des revendications précédentes, **caractérisé en ce que** le bus de données (11) affecté à la mémoire (10) présente une largeur de transmission d'au moins 128 bits et le bus de données (14) affecté au second processeur (12) présente une largeur de transmission d'au moins 32 bits.

6. Système multiprocesseurs selon l'une quelconque des revendications précédentes, **caractérisé en ce qu'**une autre mémoire de données intégrée sur puce (16) est connectée au second processeur (12) par le biais du second bus de données (14).

7. Système multiprocesseurs selon la revendication 6, **caractérisé en ce que** pour permettre un accès du premier processeur (2) à l'autre mémoire de données (16), un contrôleur DMA (17), ainsi qu'une seconde passerelle (18) sont prévus au niveau de la puce.

8. Système multiprocesseurs selon l'une quelconque des revendications précédentes, **caractérisé en ce qu'**au moins une mémoire de données interne rapide (5a, 5b) et/ou au moins une mémoire de programme interne rapide (4) sont/est affectée(s) au premier processeur (2).

9. Système multiprocesseurs selon la revendication 8, **caractérisé en ce que** le sous-système de processeurs (3) formé par le premier processeur (2) et la ou les mémoire(s) interne(s) présente/présentent une architecture Harvard double.

10. Système multiprocesseurs selon l'une quelconque des revendications précédentes, **caractérisé en ce que** la mémoire (10) est une mémoire MTP ou une mémoire FLASH.

11. Système multiprocesseurs selon la revendication 6, **caractérisé en ce que** l'autre mémoire de données (16) est une DRAM ou une SRAM.

12. Système multiprocesseurs selon la revendication 8, **caractérisé en ce que** la mémoire de données rapide interne (5a, 5b) et/ou la mémoire de programme (4) sont/est une RAM.

13. Terminal de téléphonie mobile avec un système multiprocesseurs selon l'une quelconque des revendications 1 à 12.
